# EUROPEAN PATENT APPLICATION

(11) **EP 3 324 525 A1**
(43) Date of publication of application: **23.05.2018**
(21) Application number: 16824392.1
(22) Date of filing: 08.07.2016
(51) Int. Cl.: H02K 37/14, G01D 13/22, H02K 7/00, H02K 7/116, H02K 37/24

(54) **MOTOR, MOTOR DEVICE, AND POINTER TYPE DISPLAY DEVICE**

(30) Priority: 13.07.2015 JP 2015139286
(71) Applicant: Nidec Sankyo Corporation, Suwa-gun, Nagano 393-8511 (JP)
(72) Inventor: YOKOYAMA Masaki, Suwa-gun Nagano 393-8511 (JP)
(74) Representative: Becker Kurig Straus
(86) International application number: PCT/JP2016/070200
(87) International publication number: WO 2017/010412

(57) **Abstract**

The purpose of the present invention is to propose the following: a motor in which a stator core can be positioned accurately with respect to a case; a motor device equipped with the motor; and a pointer type display device. Specifically, in a motor 1, a stator core 60 is equipped with a round hole 66 and a long hole 68, and positioning pieces 25, 26 that correspond to the round hole 66 and the long hole 68 are formed in a first case 21. The positioning piece 26 is equipped with a notch 261, guide parts 262A, 262B disposed to either side of the notch 261, and a protrusion 264 positioned to the outer peripheral side of the notch 261. The long hole 68 is formed in a projecting part 67 that projects to the outer peripheral side from a linking part 65b of the stator core 60. The stator core 60 is positioned by fitting the round hole 66 into a support shaft 48 of a first gear 41, and fitting the protrusion 264 of the positioning part 26 into the long hole 68.

## Description

### [Field of the Disclosure]

The disclosure relates to a motor, a motor device and a pointer type display device, in which a rotor and a stator disposed on an outer peripheral side with respect to the rotor are accommodated in a case.

### [Background Art]

In a display device such as a vehicle meter device, a structure may be adopted in which rotation of a motor is transmitted to an output shaft through a reduction gear mechanism and a pointer is attached to an end part of an output shaft. In this case, it may be structured that a motor includes a rotor having a cylindrical shaped magnet, a stator disposed on an outer peripheral side with respect to the rotor, and a case accommodating the rotor and the stator, and that the stator includes a stator core provided with a plurality of salient poles disposed along a peripheral face of the magnet and coils wound around two poles among the plurality of the salient poles. This type of a motor is disclosed in Patent Literature 1.

### [Citation List]

### [Patent Literature]

[Patent Literature 1] Japanese Patent Laid-Open No. 2001-327149

### [Summary of the Disclosure]

### [Technical Problem]

In the motor described in Patent Literature 1, positioning of a rotor is performed so that a rotation shaft of the rotor is supported by a shaft hole provided in a case. On the other hand, positioning of a stator is performed so that a support shaft supporting one of gears of a reduction gear mechanism is fixed to the case through a hole formed in the stator core and, in addition, a protruded part protruded from an outer peripheral edge of the stator core is engaged with a cut-out part formed in an edge of the case. In other words, the stator core in Patent Literature 1 is positioned by the case at two positions, i.e., the hole through which the shaft of a gear is passed and the protruded part protruded from an outer peripheral edge of the stator core.

However, in the positioning part where the protruded part formed at an outer peripheral edge of the stator core is engaged with the cut-out part formed at an edge of the case, positioning is performed with edges of the protruded part as a reference and thus the positioning is performed with the most separated portion from the center in a circumferential direction of the protruded part as the reference. Therefore, a positioning error becomes large and thus it is difficult to perform centering of the stator core with a high degree of accuracy. Accordingly, the center positions of the rotor and the stator core may be varied and an air gap between the salient poles and the magnet may be varied. As a result, vibration and noise are increased and motor characteristics may be varied.

In view of the problem described above, an objective of the disclosure is to provide a motor in which a stator core is capable of being positioned with respect to a case with a high degree of accuracy, and a motor device and a pointer type display device including the motor.

### [Means to solve the Problems]

To achieve the above mentioned objective, the disclosure provides a motor including a rotor having a magnet alternately provided with an "S"-pole and an "N"-pole in a circumferential direction, a stator having a stator core provided with a plurality of salient poles which are disposed in the circumferential direction so that each of tip end parts of the salient poles faces an outer peripheral face of the magnet through a gap space, and coils which are disposed around two of the plurality of the salient poles, and a case which accommodates the rotor and the stator. The case is provided with at least two positioning parts for positioning the stator core, one of the positioning parts is provided with a projecting part, and the stator core is provided with at least two hole parts corresponding to the positioning parts. One of the hole parts is a round hole and another hole part of the hole parts is an elongated hole into which the projecting part is fitted.

According to the disclosure, the stator core is provided with hole parts and the positioning parts corresponding to the hole parts are formed in the case. The hole parts comprise an elongated hole and a round hole and thus the stator core can be positioned by fitting a projecting part of the case into the elongated hole with the round hole as a reference. According to the positioning structure, positioning can be performed with a center of the hole part as a reference and thus centering of the stator core can be performed with a high degree of accuracy and deviation of the stator center from the rotor center can be reduced.

In the disclosure, it is preferable that at least one of the positioning parts is provided at an edge part of the case. When an edge part of the case is utilized as described above, the positioning part can be provided easily.

In the disclosure, it is preferable that a protruded part is formed at an outer peripheral edge of the stator core and the elongated hole is formed in the protruded part. According to this structure, the protruded part can be positioned with respect to the positioning part provided at the edge part of the case.

In the disclosure, it is preferable that the positioning part provided at the edge part of the case is provided with a cut-out part in which the protruded part is disposed, a pair of guide parts which are provided on both sides in a width direction of the cut-out part, and the projecting part which is located on an outer peripheral side with respect to the pair of the guide parts. According to this structure, the protruded part is guided by a pair of the guide parts so that the protruded part is guided to the cut-out part and the projecting part can be fitted into the elongated hole. Therefore, the stator core is easily positioned.

In the disclosure, it is preferable that the stator includes terminal pins connected with the coil, the case is provided with through-holes into which the terminal pins are inserted and, when the stator is to be assembled to the case, the protruded part is disposed between the pair of the guide parts before the terminal pins are inserted into the through-holes. According to this structure, when the stator is to be assembled to the case, first, the terminal pins can be positioned with respect to the through-holes of the case by the protruded part guided through a pair of the guide parts. Therefore, the terminal pins are easily inserted into the through-holes.

In the disclosure, it is preferable that the positioning part corresponding to the round hole and the positioning part corresponding to the elongated hole are located at angular positions separated by 180 degrees with a rotation center of the rotor as a reference. According to this structure, the stator core can be positioned at two positions opposite to each other with the rotor as a center. Therefore, centering of the stator core can be performed with a high degree of accuracy and deviation of the stator center from the rotor center can be reduced.

The motor in accordance with the disclosure may be used in a motor device. The motor device includes a gear train which transmits rotation of the rotor and an output shaft to which the rotation of the rotor is transmitted through the gear train.

In the disclosure, it is preferable that a support shaft supporting a gear of the gear train is inserted into the round hole, and the stator core is positioned with respect to the case through the support shaft. According to this structure, the stator core can be positioned by utilizing a shaft for a gear structuring the gear train. Therefore, the gear train and the stator can be disposed compact and work man-hours at the time of assembling can be reduced.

The motor device in accordance with the disclosure can be used in a pointer type display device. In the pointer type display device, a pointer is driven by the output shaft.

### [Effects of the Disclosure]

According to the disclosure, the stator core is provided with hole parts (round hole and elongated hole) and thus the projecting part of the case is disposed in the elongated hole with the round hole as a reference and the stator core can be positioned. According to the positioning structure, positioning can be performed with a center of the hole part as a reference and thus centering of the stator core can be performed with a high degree of accuracy and deviation of the stator center from the rotor center can be reduced.

### [Brief Description of the Drawings]

FIGs. 1A and 1B are perspective views showing a motor device to which the disclosure is applied.
FIG. 2 is a cross-sectional view showing a motor device to which the disclosure is applied.
FIG. 3A is a perspective view showing a first case to which a stator is assembled and FIG. 3B is a perspective view showing the first case.
FIG. 4 is a plan view showing a first case and a stator core.

### [Description of Embodiments]

A motor, a motor device and a pointer type display device to which the disclosure is applied will be described below with reference to the accompanying drawings.

### (Entire Structure)

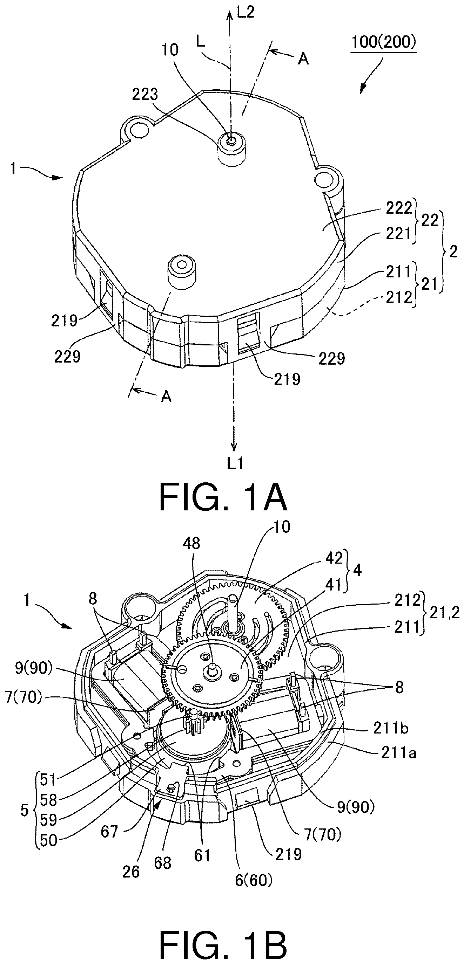

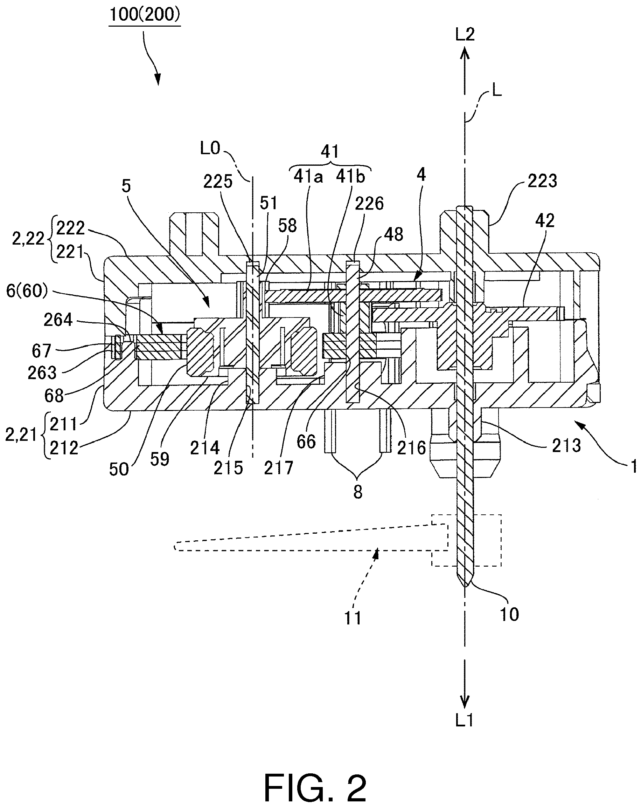

Fig. 1A is a perspective view showing a motor device 100 to which the disclosure is applied, and Fig. 1B is a perspective view showing a state that a first case 21 is detached from the motor device 100. Further, FIG. 2 is a cross-sectional view ("A-A" cross-sectional view in Fig. 1A) showing the motor device 100 to which the disclosure is applied. The motor device 100 in this embodiment is used in a pointer type display device 200. The pointer type display device 200 includes the motor device 100 and a pointer 11 which is driven by the motor device 100. The motor device 100 includes a motor 1, a gear train 4 to which rotation of the motor 1 is transmitted, and an output shaft 10 to which rotation of the gear train 4 is transmitted. The pointer 11 is attached to the output shaft 10.

### (Motor)

The motor 1 includes a case 2, a rotor 5 rotatably supported by the case 2, and a stator 6 disposed around the rotor 5. In this specification, in a direction where an axial line "L" of the output shaft 10 is extended, a side to which the output shaft 10 is protruded from the case 2 is referred to as a first direction "L1", and an opposite side to the side where the output shaft 10 is protruded is referred to as a second direction "L2". Further, a rotation center axial line "L0" of the rotor 5 is parallel to the axial line "L" of the output shaft 10 and thus, one side of the rotation center axial line "L0" of the rotor 5 is directed to the first direction "L1" and the other side of the rotation center axial line "L0" is directed to the second direction "L2".

The case 2 includes a first case 21 disposed in the first direction "L1" of the axial line "L" direction and a second case 22 disposed in the second direction "L2" of the axial line "L" direction. The first case 21 is provided with an end plate part 212 to which the rotor 5 and the stator 6 are assembled and a side plate part 211 which is stood up to the second direction "L2" from an outer peripheral edge of the end plate part 212. The end plate part 212 is formed with a tube part 213 which supports the output shaft 10. The output shaft 10 is protruded from the tube part 213 to the first direction "L1" of the axial line "L" direction.

The second case 22 is provided with an end plate part 222 which faces the end plate part 212 of the first case 21 in the axial line "L" direction, and a side plate part 221 which is stood up from an outer peripheral edge of the end plate part 222 to the first direction "L1". The side plate part 211 of the first case 21 is formed with a protruded part 219 at a plurality of positions and the side plate part 221 of the second case 22 is formed with a hook 229 at positions corresponding to the protruded parts 219 of the first case 21. When the hooks 229 and the protruded parts 219 are engaged with each other so that the first case 21 and the second case 22 are connected with each other, the case 2 is structured.

As shown in Figs. 1B and 2, the rotor 5 includes a rotation shaft 51 rotatably supported by the case 2. The rotor 5 includes a pinion 58 which is fixed to an end part in the second direction "L2" of the rotation shaft 51 and a magnet 50 formed in a cylindrical shape. An "S"-pole and an "N"-pole are alternately arranged with equal angular intervals on an outer peripheral face of the magnet 50. In this embodiment, the magnet 50 and the pinion 58 are integrated with each other by insert molding, and the magnet 50 and the pinion 58 are combined with each other through a circular plate part 59 made of resin. The circular plate part 59 is fixed to the rotation shaft 51.

As shown in FIG. 2, the end plate part 212 of the first case 21 is formed with a cylindrical tube part 214 which is protruded to the second direction "L2". The cylindrical tube part 214 is formed with a shaft hole 215 which rotatably supports an end part in the first direction "L1" of the rotation shaft 51 of the rotor 5. On the other hand, the end plate part 222 of the second case 22 is formed with a shaft hole 225 which rotatably supports an end part in the second direction "L2" of the rotation shaft 51 of the rotor 5.

The gear train 4 decelerates and transmits rotation of the rotor 5 to the output shaft 10. As shown in FIG. 2, the gear train 4 is supported by the case 2 similarly to the rotor 5 and the stator 6. The gear train 4 includes a first gear 41 and a second gear 42. The first gear 41 is provided with a large diameter gear part 41a engaged with the pinion 58 of the rotor 5 and a small diameter gear part 41b engaged with the second gear 42. The output shaft 10 is fixed to the second gear 42 by press-fitting or insert molding. The output shaft 10 is rotatably supported by the tube part 213 of the first case 21 and a tube part 223 of the second case 22. The first gear 41 is rotatably supported by a support shaft 48. Both ends of the support shaft 48 are held by a shaft hole 216 formed in the first case 21 and a shaft hole 226 formed in the second case 22. The shaft hole 216 of the first case 21 is formed in a cylindrical tube part 217 which is protruded to the second direction "L2" from the end plate part 212.

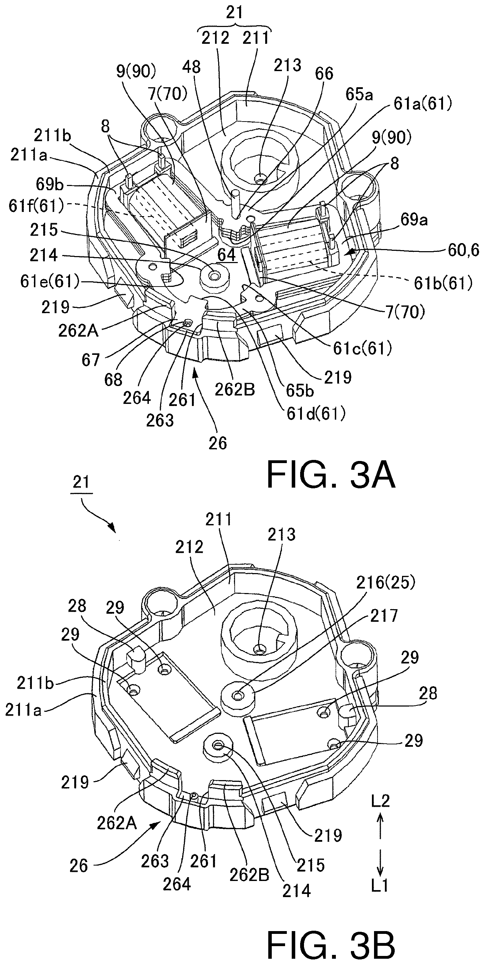

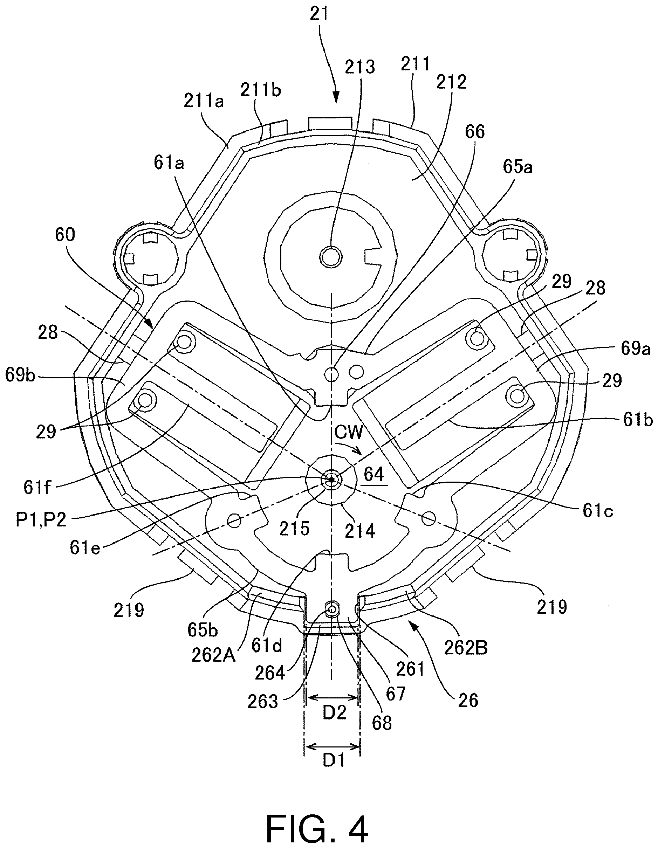

FIG. 3A is a perspective view showing the first case 21 to which the stator 6 is assembled and FIG. 3B is a perspective view showing the first case 21. Further, FIG. 4 is a plan view showing the first case 21 and a stator core 60. As shown in Figs. 1B and 3A, the stator 6 includes the stator core 60 provided with a plurality of salient poles 61 (salient poles 61a through 61f) which face an outer peripheral face of the magnet 50 through a gap space therebetween. Further, the stator 6 includes coil bobbins 7 attached to the salient poles 61b and 61f (main pole) of the plurality of the salient poles 61 and coils 9 wound around the salient poles 61b and 61f through the coil bobbins 7. In this embodiment, the number of the salient poles 61 is six (6), and four pairs of "S"-poles and "N"-poles are formed in the magnet 50. Further, the salient poles 61f and 61b (main pole) are disposed on a side of the first gear 41 with respect to the rotation shaft 51 of the rotor 5.

The coil bobbin 7 includes a bobbin main body 70 having an insulation property around which a coil wire 90 structuring the coil 9 is wound and two terminal pins 8 which are held by the bobbin main body 70. Each of the salient poles 61b and 61f of the stator core 60 is inserted into an inner side of the bobbin main body 70 and, as a result, the coil 9 is disposed around each of the salient poles 61b and 61f. An end part of the coil wire 90 is bound around one end part of the terminal pin 8 protruded from the bobbin main body 70 and then the end part of the coil wire 90 is soldered. The other end part of the terminal pin 8 is inserted through a through-hole 29 (see FIG. 3B) formed in the end plate part 212 of the first case 21 and is protruded to the first direction "L1" from the first case 21 (see FIG. 2). The terminal pin 8 protruded from the first case 21 is connected with a wiring member (not shown) such as a wiring circuit board.

The stator core 60 is structured so that a portion where the rotor 5 is disposed is formed to be an opening part 64, and a plurality of the salient poles 61 is protruded from an inner peripheral edge of the opening part 64 toward the outer peripheral face of the magnet 50. A tip end part on an inner side in a radial direction of the salient pole 61 faces the outer peripheral face of the magnet 50 through a gap space. The stator core 60 is structured so that lengths of the salient poles 61b and 61f (main pole) to which the coil bobbins 7 are attached are longer than those of other salient poles 61a, 61c through 61e (auxiliary pole). Therefore, the stator core 60 is provided with rectangular parts 69a and 69b which are projected to an outer side in a radial direction in a substantially rectangular shape in portions where the salient poles 61b and 61f (main pole) are formed. The salient poles 61b and 61f are protruded to an inner side in the radial direction from outer peripheral portions of the rectangular parts 69a and 69b. The rectangular parts 69a and 69b are connected with each other through a connecting part 65a on a side of the first gear 41 with respect to the opening part 64. One (salient pole 61a) of the salient poles 61 (auxiliary pole) where the coil 9 is not disposed is protruded to an inner side in the radial direction from the connecting part 65a. Further, a connecting part 65b which connects other salient poles 61c through 61e (auxiliary pole) with each other is provided on an opposite side to the first gear 41 with respect to the opening part 64. The salient poles 61c through 61e (auxiliary pole) are protruded to an inner side in the radial direction from the connecting part 65b.

In the motor 1 of the motor device 100 in this embodiment, four pairs of "S"-poles and "N"-poles are formed in the magnet 50 at equal angular intervals and the stator core 60 is formed with the six salient poles 61. The salient poles 61 are disposed at unequal intervals and angular intervals of the salient poles 61 adjacent to each other in the circumferential direction are 56.25°, 56.25°, 67.5°, 67.5°, 56.25° and 56.25° in the clockwise direction CW shown in FIG. 4 with the salient pole 61a as a starting point.

As described above, when the two salient poles 61f and 61b whose angular positions are displaced from each other by 112.5° in the circumferential direction are utilized as the main poles, in a case that the magnet 50 is provided with eight (8) poles, the salient poles 61b and 61f (main pole) around which the coils 9 are disposed are arranged so that, when the center in the circumferential direction of one of the main poles faces between an "S"-pole and an "N"-pole, in other words, a boundary portion between an "S"-pole and an "N"-pole, the center in the circumferential direction of the other of the main poles faces the center in the circumferential direction of an "S"-pole or the center in the circumferential direction of an "N"-pole. Therefore, a sufficient excitation torque can be obtained for rotation of the rotor 5. Further, when the respective intervals of the salient poles 61 adjacent to each other in the circumferential direction are set in the above-mentioned values, a variation of the detent torque is small. Therefore, in the motor device 100 in this embodiment, vibration of the rotor 5 is small. Accordingly, sound occurred during rotation of the rotor 5 can be reduced and thus the noise can be reduced.

In the motor 1, the motor device 100 and the pointer type display device 200 structured as described above, when electrical power is supplied to the coils 9 through the terminal pins 8, the rotor 5 is rotated and its rotation is transmitted to the output shaft 10 through the gear train 4 shown in FIG. 2 and the like. Therefore, the pointer 11 attached to the output shaft 10 is turned. In this case, when a predetermined number of drive pulses is inputted to the coils 9, an angular position of the pointer 11 is changed and, after the pointer 11 is turned to the clockwise direction to a target position, the pointer 11 is stopped. Further, when drive pulses for reverse rotation are supplied, the pointer is turned to the counterclockwise direction to another target position.

### (Positioning of Stator Core)

The stator core 60 is a plate-shaped member which is structured by laminating a plurality of magnetic plates punched in the above-mentioned shape. The stator core 60 is formed with a round hole 66 in the vicinity of a root portion of the salient pole 61a located on the side of the gear train 4. The round hall 66 is a hole into which a support shaft 48 passing through the center of the first gear 41 is fitted. Further, the stator core 60 is provided with a protruded part 67 protruded to an outer side in the radial direction at a position of the salient pole 61d which is located on an opposite side to the gear train 4. The protruded part 67 is formed with an elongated hole 68. The elongated hole 68 is located at the center in the circumferential direction of the protruded part 67. The round hall 66 and the elongated hole 68 are hole parts for positioning the stator core 60.

As described above, a portion of the stator core 60 where the rotor 5 is disposed is formed to be the opening part 64 and the stator core 60 is provided with the connecting part 65a on the side of the first gear 41 with respect to the opening part 64 and the connecting part 65b in a circular arc shape on the opposite side to the first gear 41 with respect to the opening part 64. The connecting parts 65a and 65b surround the opening part 64 in a ring shape except the portions where the rectangular parts 69a and 69b are formed. The round hole 66 is a circular hole. Further, the shape of the elongated hole 68 is an elongated circular shape whose major axis direction is coincided with a direction formed by connecting the center of the round hall 66 with the center of the elongated hole 68. The round hole 66 and the elongated hole 68 are formed at angular positions separated from each other by 180 degrees with the point "P1" as a reference where the center lines of the salient poles 61a through 61f are intersected. Therefore, the major axis direction of the elongated hole 68 is a direction coincided with the radial direction with the point "P1" as a reference where the center lines of the salient poles 61a through 61f are intersected.

The first case 21 is provided with positioning parts 25 and 26 which determine the position of the stator core 60 at two positions. The round hole 66 of the stator core 60 is formed at the position corresponding to the positioning part 25 and the protruded part 67 and the elongated hole 68 are formed at the position corresponding to the positioning part 26. The positioning parts 25 and 26 determine the position of the stator core 60 with respect to the first case 21 so that the center of the stator 6 and the rotation center of the rotor 5 are coincided with each other as described below.

The positioning part 25 is formed in the end plate part 212. In this embodiment, a shaft hole 216 into which the support shaft 48 of the first gear 41 is press-fitted functions as the positioning part 25 (see FIG. 3B). In other words, when the support shaft 48 press-fitted into the shaft hole 216 is inserted into and passed through the round hole 66 of the stator core 60, the stator core 60 is positioned by the support shaft 48 as shown in FIG. 3A.

The other positioning part 26 is formed in the side plate part 211 of the first case 21. The side plate part 211 is provided with a step part 211a formed on its outer peripheral face at a midway position where the side plate part 211 is stood up toward the second direction "L2" and an edge part 211b stood up to the second direction "L2" from an inner peripheral edge of the step part 211a. The edge part 211b is formed over the entire periphery of the side plate part 211. The positioning part 26 is provided with a cut-out part 261 which is formed by cutting out the edge part 211b at a position corresponding to the protruded part 67 of the stator core 60, a pair of guide parts 262A and 262B protruded to the second direction "L2" on both sides in the circumferential direction of the cut-out part 261, a recessed part 263 formed in the step part 211a with the same width as the cut-out part 261, and a projecting part 264 which is protruded to the second direction "L2" at the center in the circumferential direction of the recessed part 263. As shown in FIG. 4, the projecting part 264 is located on an outer peripheral side in the radial direction with respect to the guide parts 262A and 262B. Further, a distance "D1" between the guide parts 262A and 262B is larger than a width "D2" of the protruded part 67, and tip ends of the guide parts 262A and 262B are formed in chamfered shapes (see FIG. 3B).

As shown in FIG. 3A, when the protruded part 67 of the stator core 60 is fitted to the cut-out part 261 and the protruded part 67 is placed on the recessed part 263, a state that the projecting part 264 is fitted into the elongated hole 68 is obtained. The projecting part 264 is formed in a columnar shape, and its diameter is set to be a dimension so that the projecting part 264 is movable in the elongated hole 68 in its major axis direction and is not movable in a minor axis direction of the elongated hole 68. Therefore, the positioning part 26 prevents turning of the stator core 60 in a turning direction around the support shaft 48 because the projecting part 264 is fitted into the elongated hole 68.

The positioning parts 25 and 26 are disposed at angular positions separated from each other by 180 degrees with the center "P2" of the shaft hole 215 into which the rotation shaft 51 of the rotor 5 is fitted as a reference. In other words, the positioning parts 25 and 26 are disposed so that a straight line formed by the center of the shaft hole 216 structuring the positioning part 25 and the center of the projecting part 264 provided in the positioning part 26 is passed through the center "P2" of the shaft hole 215. Therefore, the positioning parts 25 and 26 determine the position of the stator core 60 at the angular positions separated from each other by 180 degrees with the rotation center of the rotor 5 as a reference. The stator core 60 is positioned so that its portion where the round hole 66 is formed is positioned by the positioning part 25 through the support shaft 48 and the protruded part 67 where the elongated hole 68 is formed is positioned by the positioning part 26. As a result, the stator core 60 is positioned at a position where the center of the stator 6 (in other words, the point "P1" where center lines of the salient poles 61a through 61f are intersected with each other) and the rotation center of the rotor 5 (in other words, the center "P2" of the shaft hole 215 into which the rotation shaft 51 is fitted) are coincided with each other (see FIG. 4).

### (Assembling of Motor)

When the motor 1 is to be assembled, first, the support shaft 48 of the first gear 41 is press-fitted to the shaft hole 216 formed in the first case 21. Further, the rotation shaft 51 of the rotor 5 is press-fitted to the shaft hole 215. After that, as shown in FIG. 3A, the stator 6 in which the coil bobbins 7, the coils 9 and the terminal pins 8 are attached to the stator core 60 is attached to the first case 21. In this case, first, a tip end of the support shaft 48 is inserted into the round hole 66 of the stator core 60 and, after that, the protruded part 67 is inserted between a pair of the guide parts 262A and 262B. Successively, when the stator core 60 is brought close to the end plate part 212 of the first case 21 while the protruded part 67 is guided by the guide parts 262A and 262B, the four terminal pins 8 are inserted into the four through-holes 29 formed in the end plate part 212.

The first case 21 is formed with support parts 28 which are protruded to the second direction "L2" from the end plate part 212 at positions overlapping with root portions of the salient poles 61b and 61f of the stator core 60. The stator core 60 is supported at three points in the axial line "L" direction, in other words, the protruded part 67 is fitted to the cut-out part 261 and is abutted with the recessed part 263 and, in addition, the root portions of the salient poles 61b and 61f are abutted with the support part 28. Further, positioning of the stator core 60 is performed by the projecting part 264 which is fitted to the elongated hole 68.

After the stator 6 is assembled to the first case 21, the rotor 5 is assembled to the first case 21. After that, the output shaft 10 to which the second gear 42 is fixed is attached to the tube part 213 of the first case 21. Then, the first gear 41 is attached to the support shaft 48 so that the first gear 41 is meshed with the pinion 58 and the second gear 42. Finally, the first case 21 is covered with the second case 22 and then they are connected with each other to structure the case 2. When the second case 22 is connected with the first case 21, as shown in Fig. 1A, the edge part 211b and a pair of the guide parts 262A and 262B of the first case 21 are fitted to an inner peripheral side of the side plate part 221 of the second case 22. Further, as shown in FIG. 2, the protruded part 67 is sandwiched in the axial line "L" direction by the side plate part 211 of the first case 21 and the side plate part 221 of the second case 22. As a result, the stator core 60 is positioned in the axial line "L" direction.

### (Operations and Effects)

As described above, in the motor 1 in this embodiment, the positioning parts 25 and 26 are provided in the first case 21 and the stator core 60 is provided with hole parts (round hole 66 and elongated hole 68) corresponding to the positioning parts 25 and 26. The elongated hole 68 is formed in the protruded part 67 which is protruded to an outer peripheral side from the connecting part 65b of the stator core 60. Therefore, when the projecting part 264 of the positioning part 26 is fitted into the elongated hole 68 with the round hole 66 as a reference, the stator core 60 is positioned. According to this positioning structure, positioning is performed with the centers of the hole parts (round hole 66 and elongated hole 68) as a reference and thus the centering of the stator core 60 can be performed with a high degree of accuracy and deviation between the center of the stator 6 and the center of the rotor 5 can be reduced. Therefore, increase of vibration and noise caused by deviation between the centers of the rotor 5 and the stator 6 can be reduced and variation of motor characteristics can be reduced.

In this embodiment, the major axis direction of the elongated hole 68 corresponding to the positioning part 26 is coincided with a direction formed by connecting the elongated hole 68 with the round hole 66. Therefore, even in a case that an error is occurred between a distance between the positioning parts 25 and 26 of the first case 21 (in other words, a distance between the center of the shaft hole 216 where the support shaft 48 of the first gear 41 is fitted and the center of the projecting part 264) and a distance between the hole parts of the stator core 60 (in other words, a distance between the center of the round hole 66 and the center of the elongated hole 68, the error can be absorbed in a range of a difference between an inner diameter dimension in the major axis direction of the elongated hole 68 and a diameter of the projecting part 264. Therefore, the stator core 60 can be assembled to the first case 21. Further, a direction where the position of the projecting part 24 is displaced in the elongated hole 68 is coincided with a direction where the elongated hole 68 and the round hole 66 are connected with each other, and turning prevention of the stator core 60 is performed in a turning direction with the support shaft 48 which is fitted to the shaft hole 216 of the first case 21 as a turning center. Therefore, deviation of the stator center from the rotor center can be reduced.

Further, in this embodiment, the positioning parts 25 and 26 are provided at angular positions separated from each other by 180 degrees with the rotation center of the rotor 5 as a reference and thus the position of the stator core 60 is determined by two positions opposite to each other with the rotor 5 as a center. Therefore, the centering of the stator core 60 can be performed with a high degree of accuracy and deviation of the center of the stator 6 from the center of the rotor 5 can be reduced.

Further, in this embodiment, the positioning part 26 is formed in the edge part 211b which is provided in the side plate part 211 of the first case 21. Therefore, the protruded part 67 protruded from the stator core 60 to an outer peripheral side can be positioned. Further, the positioning part 26 is provided with a pair of the guide parts 262A and 262B and thus the protruded part 67 is guided by the guide parts 262A and 262B and is placed on the cut-out part 261. Therefore, work for fitting the projecting part 264 to the elongated hole 68 is easily performed.

Further, in this embodiment, when the stator 6 is to be assembled to the first case 21, the protruded part 67 is guided by a pair of the guide parts 262A and 262B before the terminal pins 8 of the stator 6 are fitted to the through-holes 29 of the first case 21. In other words, since the terminal pins 8 can be guided to the through-holes 29 by the guide parts 262A and 262B, work for inserting the terminal pins 8 into the through-holes 29 is easily performed.

Further, in this embodiment, the support shaft 48 which supports the first gear 41 of the gear train 4 is inserted into the round hole 66 and the stator core 60 is positioned with respect to the first case 21 through the support shaft 48. As described above, when the stator core 60 is positioned by utilizing the support shaft 48 of the first gear 41 structuring the gear train 4, the gear train 4 and the stator 6 can be disposed in a compact manner. Further, work man-hours for assembling can be reduced.

### (Modified Embodiment)

In the embodiment described above, the stator core 60 is positioned at two positions by the positioning parts 25 and 26. However, it may be structured that the first case 21 is provided with three or more positioning parts and the stator core 60 is provided with three or more hole parts so as to correspond to the positioning parts.

### (Other Embodiment)

In the embodiment described above, the motor device 100 is, as an example, applied to a pointer type display device 200. However, the disclosure may be applied to a device other than the motor device 100 for a pointer type display device.

### [Reference Signs List]

1 ... motor, 2 ... case, 4 ... gear train, 5 ... rotor, 6 ... stator, 7 ... coil bobbin, 8 ... terminal pin, 9 ... coil, 10 ... output shaft, 11 ... pointer, 21 ... first case, 22 ... second case, 25 ... positioning part, 26 ... positioning part, 28 ... support part, 29 ... through-hole, 41 ... first gear, 41a ... large diameter gear part, 41b ... small diameter gear part, 42 ... second gear, 48 ... support shaft, 50 ... magnet, 51 ... rotation shaft, 58 ... pinion, 59 ... circular plate part, 60 ... stator core, 61 (61a through 61f) ... salient pole, 64 ... opening part, 65a, 65b ... connecting part, 66 ... round hole, 67 ... protruded part, 68 ... elongated hole, 69a, 69b ... rectangular part, 70 ... bobbin main body, 90 ... coil wire, 100 ... motor device, 200 ... pointer type display device, 211 ... side plate part, 211a ... step part, 211b ... edge part, 212 ... end plate part, 213 ... tube part, 214 ... cylindrical tube part, 215 ... shaft hole, 216 ... shaft hole, 217 ... cylindrical tube part, 219 ... protruded part, 221 ... side plate part, 222 ... end plate part, 223 ... tube part, 225 ... shaft hole, 226 ... shaft hole, 229 ... hook, 261 ... cut-out part, 262A, 262B ... guide part, 263 ... recessed part, 264 ... projecting part, "CW" ... clockwise direction, "L" ...axial line of output shaft, "L0" ...rotation center axial line of rotor, "L1" ... first direction, "L2" ... second direction, "P1" ... point where center lines of salient poles intersect, "P2" ... center of the shaft hole which rotation shaft of rotor is fitted.

## Claims

1. A motor comprising:
a rotor comprising a magnet alternately provided with an S-pole and an N-pole in a circumferential direction;
a stator comprising:
a stator core provided with a plurality of salient poles which are disposed in the circumferential direction so that each of tip end parts of the salient poles faces an outer peripheral face of the magnet through a gap space; and
coils which are disposed around two of the plurality of the salient poles; and
a case which accommodates the rotor and the stator;
wherein the case is provided with at least two positioning parts for positioning the stator core;
wherein one of the positioning parts is provided with a projecting part;
wherein the stator core is provided with at least two hole parts corresponding to the positioning parts; and
wherein one of the hole parts is a round hole and another hole part of the hole parts is an elongated hole into which the projecting part is fitted.

2. The motor according to claim 1, wherein at least one of the positioning parts is provided at an edge part of the case.

3. The motor according to claim 2, wherein a protruded part is formed at an outer peripheral edge of the stator core and the elongated hole is formed in the protruded part.

4. The motor according to claim 3, wherein the positioning part provided at the edge part of the case comprises:
a cut-out part in which the protruded part is disposed;
a pair of guide parts which are provided on both sides in a width direction of the cut-out part; and
the projecting part which is located on an outer peripheral side with respect to the pair of the guide parts.

5. The motor according to claim 4, wherein
the stator comprises terminal pins connected with the coils,
the case comprises through-holes into which the terminal pins are inserted, and
when the stator is to be assembled to the case, the protruded part is disposed between the pair of the guide parts before the terminal pins are inserted into the through-holes.

6. The motor according to one of claims 1 through 5, wherein the positioning part corresponding to the round hole and the positioning part corresponding to the elongated hole are located at angular positions separated by 180 degrees with a rotation center of the rotor as a reference.

7. A motor device comprising the motor defined in one of claims 1 through 6, the motor device comprising:
a gear train which transmits rotation of the rotor; and
an output shaft to which the rotation of the rotor is transmitted through the gear train.

8. The motor device according to claim 7, wherein
a support shaft supporting a gear of the gear train is inserted into the round hole, and
the stator core is positioned with respect to the case through the support shaft.

9. A pointer type display device in which the motor device defined in claim 7 or 8 is used, wherein a pointer is driven by the output shaft.
